# EUROPEAN PATENT APPLICATION

(11) **EP 2 677 140 A2**
(43) Date of publication of application: **25.12.2013**
(21) Application number: 13164328.0
(22) Date of filing: 18.04.2013
(51) Int. Cl.: F02C 7/05, F04D 25/08

(54) **Conical light fod momentum particle separator protector**

(30) Priority: 18.06.2012 US 201213525836
(71) Applicant: Hamilton Sundstrand Corporation, Windsor Locks, CT 06096-1010 (US)
(72) Inventor: Beers, Craig M., Westhersfield, CT Connecticut 06109 (US); Merritt, Brent J., Southwick, MA Massachusetts 01077 (US)
(74) Representative: Hull, James Edward

(57) **Abstract**

A system for preventing foreign objects from entering an air unit (10) of an aircraft is provided including a reverse J-tube (48) mounted to a wall (70) of a ram air header (20). The first end (94) of the reverse J-tube (48) defines a portion of a cool fluid flowpath (C). The ram air header (20) also includes a particle separator (90) that is removably mounted to the first end (94) of the reverse J-tube (48). The particle separator (90) prevents foreign objects from entering the cool fluid flowpath (C). The particle separator (90) has a generally conical shape. An airflow (F), opposite the direction of the cool fluid flowpath (C) removes foreign objects from a surface of the particle separator (90).

## Description

### BACKGROUND OF THE INVENTION

Exemplary embodiments of the present invention generally relate to a cooling fluid flow path of an air unit for use in an aircraft and, more particularly, to preventing foreign objects and debris from entering the cooling fluid flowpath of the air unit.

A conventional air unit used on an aircraft includes a motor supported by journal and thrust bearings. The air unit includes a cooling fluid flowpath through which a cooling fluid that cools, for example, the motor, may be passed. If debris and foreign objects, such as sand, ash, and bugs for example, enter the cool fluid flowpath in the air unit, the motor and bearings can be negatively impacted. Such impact can include motor and bearing performance degradation or excessive wear requiring increased maintenance of the air unit. Current particle separators are capable of removing large particles from the fluid, but experience a decrease in efficiency as the particle size decreases. For example, fine sand having a diameter less than 8 microns, prevalent in desert environments, is especially problematic to air units during close ground operation.

### BRIEF DESCRIPTION OF THE INVENTION

According to one embodiment of the invention, a particle separator for preventing foreign objects from entering a cool fluid flow path of an aircraft air unit is provided including a generally conical body. The conical body includes a plurality of uniform holes to allow air to enter the cool fluid flowpath. Preferably, the angle of the conical body is such that an airflow in a direction opposite the cool fluid flow path removes foreign objects from a surface of the conical body.

According to an alternate embodiment of the invention, a system for preventing foreign objects from entering an air unit of an aircraft is provided including a reverse J-tube mounted to a wall of the ram air header. The first end of the reverse J-tube defines a portion of a cool fluid flowpath. The ram air header also includes a particle separator that is removably mounted to the first end of the reverse J-tube. The particle separator prevents foreign objects from entering the cool fluid flowpath. The particle separator has a generally conical shape. Preferably, an airflow, opposite the direction of the cool fluid flowpath removes foreign objects from a surface of the particle separator.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic drawing of an exemplary air unit;
FIG. 2 is a perspective view of a portion of the air unit of FIG. 1 according to an embodiment of the invention; and
FIG. 3 is a side view of a J-tube according to an embodiment of the invention.

The detailed description explains embodiments of the invention, together with advantages and features, by way of example with reference to the drawings.

### DETAILED DESCRIPTION OF THE INVENTION

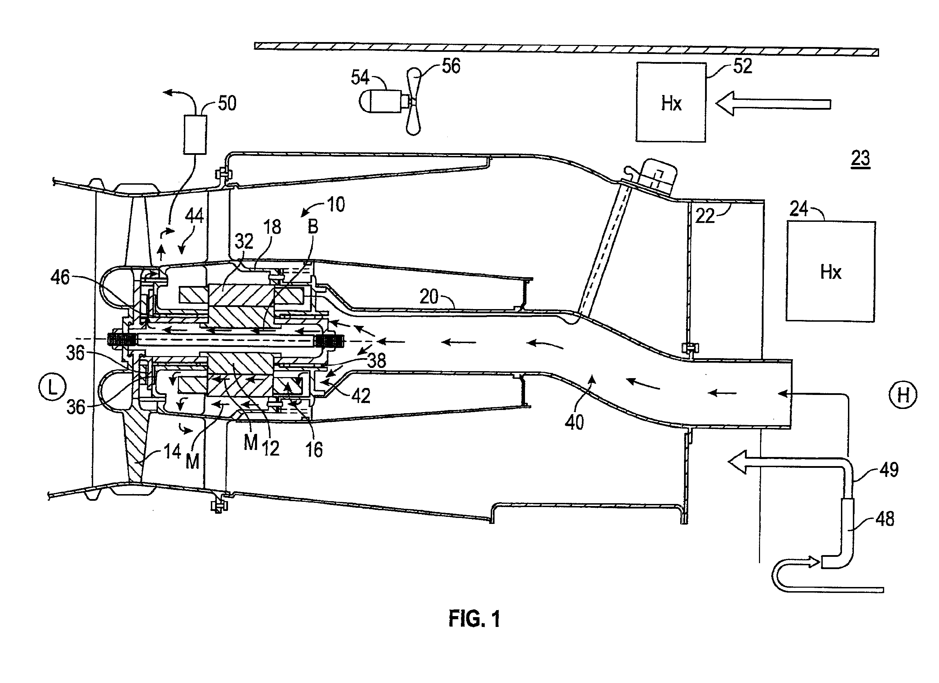

An exemplary air unit 10 for use in an aircraft is illustrated in FIG. 1. The unit 10 includes a fan rotor 12 supporting rotor blades 14. An electric motor 16 rotatably drives the fan rotor 12.

The motor 16 is arranged in a motor housing 18, and an inlet housing 20 is secured to the motor housing 18. The inlet housing 20 provides a heat exchanger inlet 22 for supplying air to the rotor blades 14. In the example shown, the inlet 22 receives air from a ram air duct 23. The rotor blades 14 pull atmospheric air through a heat exchanger 24 (shown schematically) and discharge the air overboard.

The motor 16 includes a stator 32 arranged within the motor housing 18 that produces a magnetic field, which generates heat, causing the fan rotor 12 to rotate. The fan rotor 12 is supported by a thrust bearing 36 and journal bearings 38 arranged on either end of the fan rotor 12, in the example shown.

A passage 40 is in fluid communication with the heat exchanger inlet 22 and provides cooling fluid to a cooling inlet 42 that is in fluid communication with the interior of the motor housing 18. A vent 44 is provided in the motor housing 18 that is in fluid communication with the heat exchanger outlet. The heat exchanger inlet 22 is on a high pressure side H, and the vent 44 is on a low pressure side L. The vent 44 is fluidly connected to an outlet 50 arranged in the ram air duct 23. The pressure differential between the high and low pressure sides H and L moves cooling fluid through the motor cooling inlet 42 to cool the stator 32, as indicated by the flow path M.

A reverse J-tube 48 is provided on the high pressure side H of the ram air duct 23. The reverse J-tube 48 filters the air from the ram air duct 23. A passage 49 fluidly connects the reverse J-tube 48 to the cooling inlet 42. Clean cooling fluid flows from the reverse J-tube on the high pressure side H into the bearings 36, 38 and motor 16 and out the vent 44 on the low pressure side L. As a result, pressurized air from a source, such as engine bleed air for example, is not needed to provide cooling flow. The cooling fluid flows through the motor housing 18 to cool the bearings 36, 38 and motor 16 as indicated by flow path B.

The outlet 50 is downstream of the fan rotor 56 driven by an electric motor 54 arranged within the ram air duct 23. The inlet 22 may be arranged upstream from a heat exchanger 52 within the ram air duct 23 and before the fan 56. The heat exchanger 52, electric motor 54, and fan 56 may be part of an air conditioning pack.

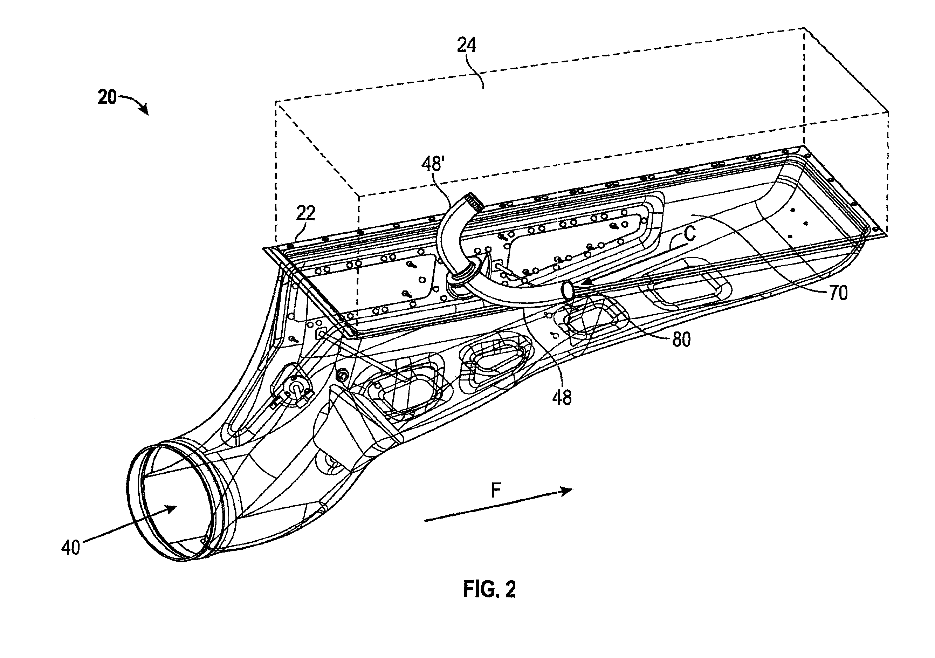

Referring now to FIG. 2, the inlet housing 20 within the ram air duct 23 is illustrated in more detail. In one embodiment, the inlet housing 20 is a ram inlet header. Disposed adjacent the inlet housing 20 are a first reverse J-tube 48 and a second reverse J-tube 48'. In one embodiment, the second reverse J-tube 48' is rotated 180 degrees relative to a first reverse J-tube 48 such that together the first and second reverse J-tubes 48, 48' form a generally semi-circular shape. In one embodiment, the first reverse J-tube 48 and the second reverse J-tube 48' are coupled to one another through a wall 70 of the inlet housing 20. The first reverse J-tube 48 may be disposed within the inlet housing 20 and the second reverse J-tube 48' may be located on the opposite side of wall 70 within the ram air duct 23. The air within the ram air duct 23 flows in a direction indicated by arrow F. A portion of the air from the ram air duct 23 enters the inlet housing 20 and travels along passage 40 to an inlet 22 of a heat exchanger 24 (illustrated schematically with dotted lines). A portion of the air travelling along passage 40 is drawn into a cool fluid flowpath, in a direction indicated by arrow C, at the first end 80 of the first reverse J-tube 48. Air drawn into the cooling fluid flowpath C travels in a direction opposite the airflow F within the ram air duct 23.

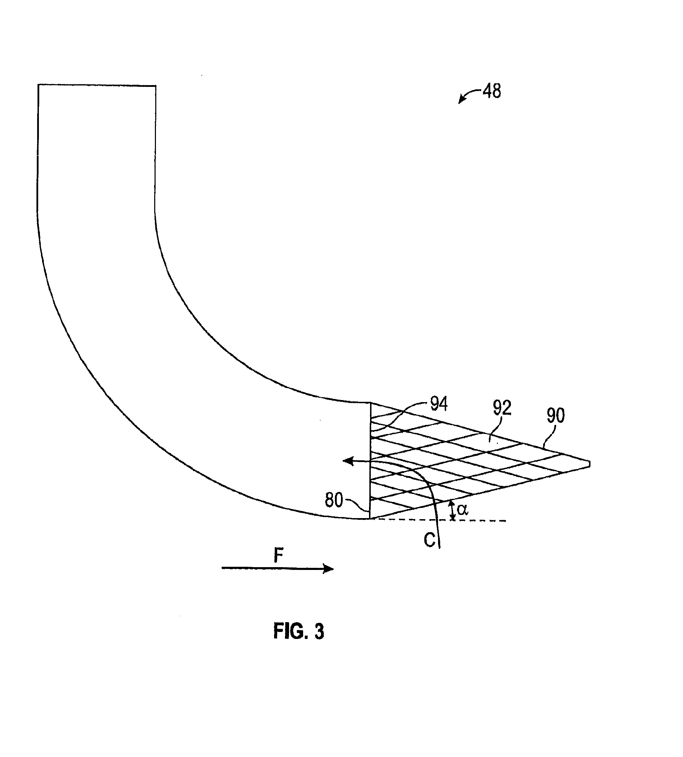

To prevent damage to the bearings 36, 38 and the motor 16, the air entering the first reverse J-tube 48 and the passage 49 along which the air then travels must remain free from debris and other foreign objects, such as bugs and paper for example. FIG. 3 is a detailed view of the first reverse J-tube 48 positioned within the inlet housing 20. Mounted to a first end 80 of the first reverse J-tube 48 is a particle separator 90. The particle separator 90 includes a plurality of generally uniform holes 92 sized to allow air, but not light foreign objects, to travel along the cool fluid flowpath C through the particle separator 90 and into the reverse J-tube 48. The particle separator 90 acts a filter, preventing particles larger than 5 micron from entering the first reverse J-tube 48. In one embodiment, the particle separator 90 is made from a coarse mesh material having holes 92 with an area in the range of about 1/16 square inches (0.40 cm²) and about 1/12 square inches (0.54 cm²). The size and shape of the holes 92 may be determined based on a selected air unit 10 and application thereof. Holes 92 may be any shape including but not limited to a square, rectangle, or diamond for example. The particle separator 90 may be made from any material including, for example metal or plastic, that is both durable and corrosion resistant.

The shape of the particle separator 90 uses the airflow F within the ram air duct 23 to "clean" the exterior of the particle separator 90. In one embodiment, the particle separator 90 is generally conical in shape, and the portion of the particle separator 90 having the greatest diameter is mounted to the first end 80 of the first reverse J-tube 48. The angle α of the particle separator 90 may be in the range of between about 25 and 35 degrees. In one embodiment, the angle α is 30 degrees. The force of the airflow F along passage 40, in the direction opposite the cooling fluid flowpath C, will remove foreign objects or debris from the surface of the particle separator 90. The airflow F along passage 40 eliminates any potential blockages that may inhibit air from flowing into the first end 80 of the reverse J-tube 48. Multiple connections exist for removably mounting a first end 94 of the particle separator 90 to the first end 80 of the first reverse J-tube 48 including but not limited to mechanical fasteners, adhesives and other similar means. In one embodiment, the particle separator 90 may be welded to the first end 94 of the first reverse J-tube 48. Alternatively, fasteners may be used to retain the particle separator 90 in position relative to the first end 80 of the first reverse J-tube 48.

By including a particle separator 90 on the end of the first reverse J-tube 48, foreign objects are restricted from entering the cooling fluid flowpath C, and maintenance of the bearings 36, 38 and motor 16 due to such debris is minimized. The particle separator prevents foreign objects from entering the J-tube when the aircraft is grounded and in-flight. Because the particle separator is "self-cleaning," debris will not obstruct the cooling fluid flowpath C into the end of the J-tube 48. In addition, the particle separator 90 can be easily removed if required while the aircraft is being serviced.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A particle separator (90) for preventing foreign objects from entering a cool fluid flow path (C) of an air unit (10) in an aircraft, comprising:
a generally conical body including a plurality of uniform holes (92) to allow air to enter the cool fluid flow path (C), wherein an angle (α) of the conical body is such that an airflow (F) in a direction opposite the cool fluid flow path (C) removes foreign objects from a surface of the conical body.

2. The particle separator (90) according to claim 1, wherein the angle (α) of the conical body is generally between about 25 and 35 degrees.

3. The particle separator (90) according to claim 2, wherein the angle (α) is 30 degrees.

4. The particle separator (90) according to any of claims 1 to 3, wherein the general conical body is made from a coarse mesh material.

5. The particle separator (90) according to any preceding claim, wherein the holes (92) have an area in the range of about 0.40 cm² (1/16 square inches) and 0.34 cm² (1/12 square inches).

6. The particle separator (90) according to claim 5, wherein the holes (92) are square and have an area of about 0.40 cm² (1/16 square inches).

7. The particle separator (90) according to any preceding claim, wherein the holes (92) prevent foreign objects larger than 5 microns from entering the cool fluid flowpath (C).

8. A system for preventing foreign objects from entering an air unit (10) of an aircraft, comprising:
a ram inlet header (20);
a reverse J-tube (48) mounted to a wall (70) of the ram inlet header (20), the reverse J-tube (48) having a first end (94) that defines a portion of a cool fluid flowpath (C), and
a particle separator (90) removably mounted to the first end (94) of the reverse J-tube (48) for preventing foreign objects from entering the cool fluid flowpath (C), the particle separator (90) having a generally conical shape such that an airflow (F), opposite the direction of the cool fluid flowpath (C), removes foreign objects from a surface of the particle separator (90).

9. The system according to claim 8, wherein an angle (α) of particle separator (90) is generally between about 25 and 35 degrees.

10. The system according to claim 9, wherein the angle (α) is 30 degrees.

11. The system according to any of claims 8 to 10, wherein the particle separator (90) includes a plurality of holes (92).

12. The system according to claim 11, wherein the particle separator (90) is made from a coarse mesh material.

13. The system according to claim 11 or 12, wherein the holes (92) have an area in the range of about 0.40 cm² (1/16 square inches) and 0.54 cm² (1/12 square inches), and the holes (92) are square and have an area of about 0.40 cm² (1/16 square inches).

14. The system according to any of claims 11 to 13, wherein the holes (92) prevent foreign objects larger than 5 microns from entering the cool fluid flowpath (C).

15. The system according to any of claims 8 to 14, wherein the particle separator (90) is welded to the first end (94) of the reverse J-tube (48).
